# EUROPEAN PATENT SPECIFICATION

(11) **EP 2 038 132 B1**
(45) Date of publication and mention of the grant of the patent: **14.03.2012**
(21) Application number: 07700873.8
(22) Date of filing: 08.01.2007
(51) Int. Cl.: B60G 21/055

(54) **APPARATUS FOR MOUNTING STABILIZER BAR FOR VEHICLES**
VORRICHTUNG ZUR BEFESTIGUNG EINES STABILISATORS FÜR FAHRZEUGE
APPAREIL DE MONTAGE DE BARRE STABILISATRICE POUR VEHICULES

(30) Priority: 27.06.2006 KR 20060057962
(43) Date of publication of application: 25.03.2009
(73) Proprietor: Dae Won Kang Up Co., Ltd., Jung-gu, Seoul 100-800 (KR)
(72) Inventor: LIM, Man-Seung, Gyeonggi-do 420-030 (KR); KIM, Jin-Young, Gyeonggi-do 420-032 (KR); KANG, Yung-Jin, Incheon 403-090 (KR)
(74) Representative: Hirsch & Associés
(86) International application number: PCT/KR2007/000094
(87) International publication number: WO 2008/001996

(56) References cited:
- DE-A1-102005 047 990
- JP-A- 2000 046 110
- JP-A- 2000 046 110
- JP-A- 2001 182 767
- JP-A- 2002 362 123
- JP-A- 2004 321 516
- KR-A- 20050 008 351
- KR-U- 19980 049 198
- US-B1- 6 286 821

## Description

### Technical Field

The present invention relates, in general, to apparatuses for mounting stabilizer bars for vehicles and, more particularly, to an apparatus for mounting a stabilizer bar for vehicles in which a rubber bushing has reduced stiffness with respect to a rotational direction, thus preventing slippage between the stabilizer bar and the rubber bushing, and the rubber bushing has enhanced internal stiffness, so that the rubber bushing is prevented from being deformed even after it is used for a long period, thus preventing a gap from occurring between the stabilizer bar and the rubber bushing, and preventing the rubber bushing from being deformed due to compressing force when the rubber bushing is press-mounted to the vehicle body frame, thereby enhancing the mounting force.

### Background Art

As well known to those skilled in the art, a stabilizer bar is a device used in a vehicle to acquire anti-roll stiffness of the vehicle body.

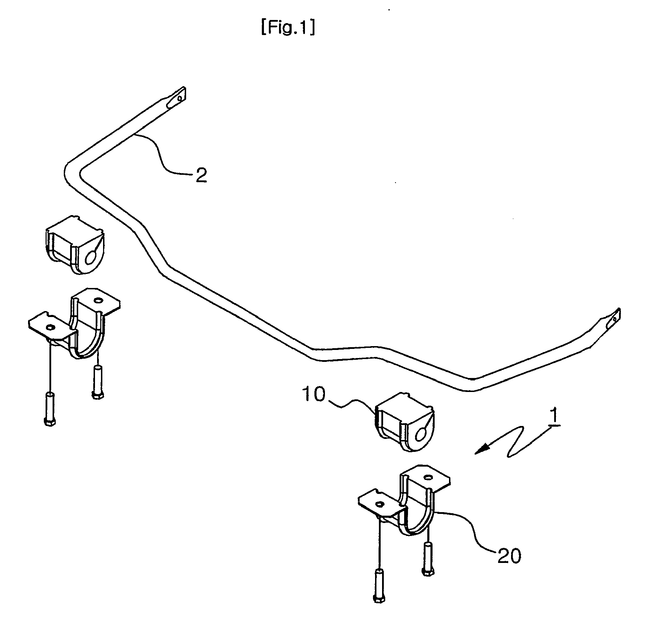

FIG. 1 is a view showing the mounting of a typical stabilizer bar. As shown in FIG. 1, the stabilizer bar 2 is mounted to a vehicle body frame (not shown) using a pair of stabilizer bar mounting apparatuses 1, each of which has a rubber bushing 10 and a mounting bracket 20 that receives the rubber bushing 10 and fastens it to the vehicle body frame.

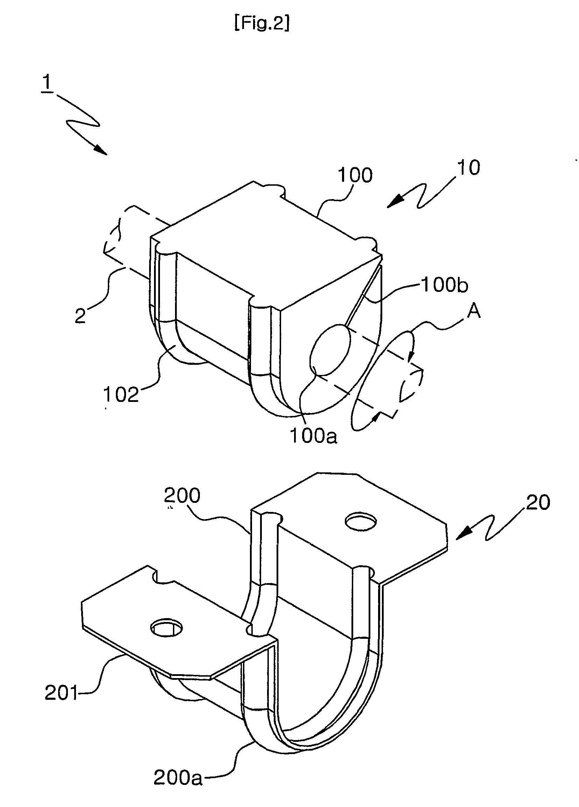

Hereinafter, the conventional stabilizer bar mounting apparatus 1 will be explained in detail with reference to FIG. 2. FIG. 2 is an exploded perspective view of the conventional stabilizer bar mounting apparatus 1. As shown in FIG. 2, the conventional stabilizer bar mounting apparatus 1 includes a rubber bushing 10 and a mounting bracket 20. The rubber bushing 10 includes a main body 100, which has a holding hole 100a formed at a central portion therethrough, so that the stabilizer bar 2 is received in the holding hole 100a, and has a slit 100b, which is formed in the main body 100 and extends from a position of the sidewall of the holding hole 100a to the outer surface of the main body 100 at an incline. The rubber bushing 10 further includes stop protrusions 102, which are provided on the respective opposite ends of the circumferential outer surface of the main body 100. The mounting bracket 20 includes a bushing receiving part 200, which has in opposite ends thereof stop grooves 200a engaging with the respective stop protrusions 102 of the rubber bushing 10. The mounting bracket 20 further includes a pair of mounting plates 201, which are provided on the respective opposite edges of the bushing receiving part 200. Thus, the mounting bracket 20 receives the rubber bushing 10 in the circumferential inner surface thereof and fastens it to the vehicle body frame.

However, in the conventional stabilizer bar mounting apparatus 1 having the above-mentioned construction, because the rubber bushing 10 has a relatively high stiffness with respect to a rotational direction (A), the rotational resistance of the stabilizer bar 2 is increased, so that, when relatively strong torsion is applied to the stabilizer bar 2, the stabilizer bar 2 is not integrally rotated along with the rubber bushing 10 but is rotated in the rotational direction (A) with respect to the rubber bushing 10, that is, slippage occurs between the stabilizer bar 2 and the rubber bushing 10. At this time, noise is generated by friction between the stabilizer bar 2 and the rubber bushing 10. Furthermore, the rubber bushing 10 is readily worn by the frictional heat. When it is used for a long period, the rubber bushing 10 is deformed by force that is transmitted from the stabilizer bar 2 in the rotational direction (A). Thereby, a gap occurs between the holding hole 100a of the rubber bushing 10 and the circumferential outer surface of the stabilizer bar 2. In the case where foreign substances or dust are inserted into the gap therebetween, the outer surface of the stabilizer bar 2 is easily worn, so that the durability thereof is reduced. As a result, the expected life span of the stabilizer bar 2 is markedly reduced.

DE-A-10 2005 047 990 discloses a generic stabilizer bar assembly for a vehicle suspension system. The stabilizer bar assembly has a stabilizer bar that is provided with an annular ring. The annular ring is either formed as an upset or assembled to the stabilizer bar. h. bushing having a groove on its inner diameter is assembled to the stabilizer bar at the annular ring that centers the stabilizer bar against transverse displacement. A second bushing is secured to the stabilizer bar at a location spaced from the annular ring. The first and second bushings secure the stabilizer bar to right and left frame rails. The annular ring may have a square, tapered or spherical cross-section.

### Disclosure of Invention

### Technical Problem

Accordingly, the present invention has been made keeping in mind the above problems occurring in the prior art, and an object of the present invention is to provide an apparatus for mounting a stabilizer bar for vehicles in which the rotational stiffness of a rubber bushing is reduced so that the rotational resistance of the stabilizer bar is reduced, thus preventing slippage between the stabilizer bar and the rubber bushing.

Another object of the present invention is to provide an apparatus for mounting a stabilizer bar for vehicles which increases the internal stiffness of the rubber bushing, so that the rubber bushing is prevented from being deformed even after being used for a long period, thus preventing a gap from occurring between the stabilizer bar and the rubber bushing, and preventing the rubber bushing from being deformed by the internal compression force of a mounting bracket, thereby enhancing the mounting ability thereof.

### Technical Solution

In order to accomplish the above objects, the present invention provides an apparatus for mounting a stabilizer bar to a vehicle body frame, comprising: a rubber bushing, including a main body having a holding hole formed at a central portion through opposite ends of the main body for insertion of the stabilizer bar into the holding hole, and a slit extending from an upper surface thereof to an upper surface of a sidewall of the holding hole such that the stabilizer bar is inserted into the holding hole, a plurality of elastic holes formed in each of the opposite ends of the main body to reduce stiffness of the main body in a rotational direction thereof, thus reducing rotational resistance of the stabilizer bar, and a stop protrusion provided on a circumferential outer surface of the main body; a plurality of metal plates inserted into the main body of the rubber bushing to form a shape such that elastic holes are sectioned into first spaces and second spaces by the metal plates, thus preventing the rubber bushing from being deformed; and a mounting bracket, comprising: a bushing receiving part having a stop groove engaging with the stop protrusion of the rubber bushing; and a pair of mounting plates provided on respective opposite edges of the bushing receiving part, the mounting bracket receiving the rubber bushing in a circumferential inner surface thereof and fastening the rubber bushing to the vehicle body frame.

### Advantageous Effects

The present invention provides an apparatus for mounting a stabilizer bar for vehicles, which has improved ability to support the stabilizer bar, thus preventing the stabilizer bar from being pushed and leaning in radial direction, and which reduces the stiffness of a rubber bushing with respect to the rotational direction, so that slippage between the stabilizer bar and the rubber bushing is prevented from being caused, thus preventing noise from being generated by friction, thereby keeping the vehicle interior quiet when the vehicle travels. Furthermore, because the rubber bushing is prevented from being worn by frictional heat, the durability of the rubber bushing can be enhanced. Moreover, the present invention enhances the internal stiffness of the rubber bushing, so that the rubber bushing is prevented from being deformed in the rotational direction of the stabilizer bar even after it is used for a long period. Therefore, a gap is prevented from occurring between the stabilizer bar and the rubber bushing, thus preventing foreign substances, which cause abrasion of the circumferential outer surface of the stabilizer bar, from entering between the stabilizer bar and the rubber bushing. Hence, the expected life span of the stabilizer bar can be markedly extended. As well, the rubber bushing is prevented from being deformed by compressing force when the rubber bushing is press-mounted to the vehicle body frame, thus enhancing the mounting force.

### Brief Description of the Drawings

FIG. 1 is a view showing the mounting of a typical stabilizer bar;
FIG. 2 is an exploded perspective view of a conventional apparatus for mounting a stabilizer bar for vehicles;
FIG. 3 is a perspective view of an apparatus for mounting a stabilizer bar for vehicles, according to an embodiment of the present invention;
FIG. 4 is a plan sectional view of the stabilizer bar mounting apparatus according to the embodiment of the present invention;
FIG. 5 is a picture showing a noise tester for stabilizer bar mounting apparatuses for vehicles;
FIG. 6 is a picture showing the stabilizer bar mounting apparatus set in the noise tester of FIG. 5;
FIG. 7 is a picture showing the stabilizer bar set in a stabilizer bar durability tester using the stabilizer bar mounting apparatuses;
FIG. 8 is pictures comparing the occurrence of gaps in the mounting apparatus of the present invention and in the conventional mounting apparatus after the durability test has been conducted;
FIG. 9 is a picture showing a process of testing the axial supporting force of the mounting apparatus that supports the stabilizer bar in an axial direction;
FIG. 10 is a graph showing the results of the test of FIG. 9;
FIG. 11 is a picture showing a process of testing the stiffness of the mounting apparatus against force applied in a transverse direction;
FIG. 12 is a graph showing results of the test of FIG. 11;
FIG. 13 is a picture showing a process of testing the stiffness of the mounting apparatus against force applied in a predetermined direction; and
FIG. 14 is a graph showing results of the test of FIG. 13.

### Best Mode for Carrying Out the Invention

Hereinafter, the present invention will be described in detail with reference to the attached drawings. For convenience of description, reference should now be made to the drawings, in which the same reference numerals are used throughout the different drawings to designate the same components as those of the conventional apparatus for mounting a stabilizer bar for vehicles.

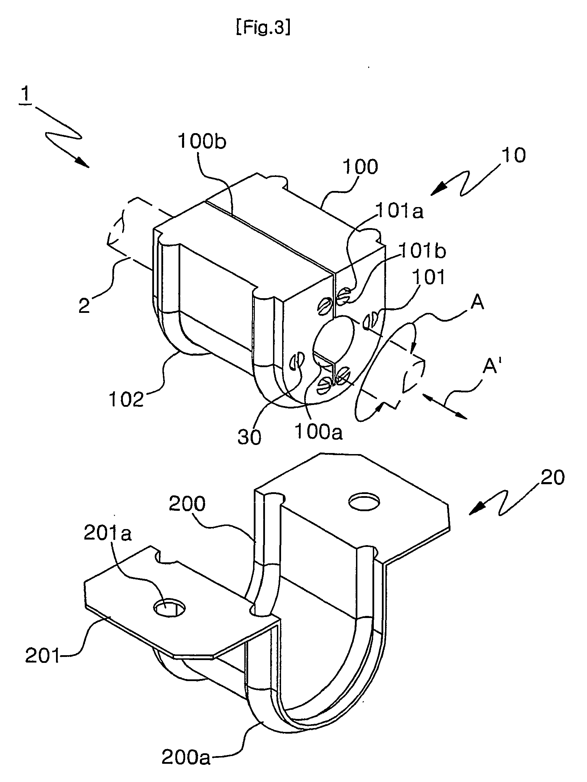

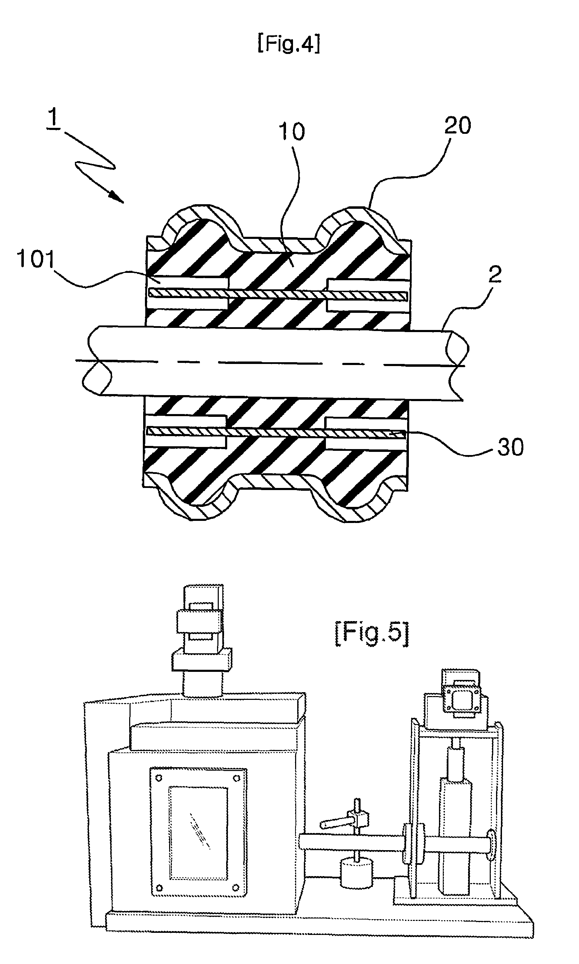

FIG. 3 is a perspective view of an apparatus for mounting a stabilizer bar for vehicles, according to an embodiment of the present invention. FIG. 4 is a plan sectional view of the stabilizer bar mounting apparatus. As shown in FIGS. 3 and 4, the stabilizer bar mounting apparatus 1 according to the embodiment of the present invention includes a rubber bushing 10, a plurality of metal plates 30 and a mounting bracket 20. The metal plates 30 are inserted into the rubber bushing 10. The rubber bushing 10, in which the metal plates 30 are inserted, is fitted over a stabilizer bar 2. The rubber bushing 10, into which the metal plates 30 are inserted, and which is fitted over the stabilizer bar 2, is supported by the mounting bracket 20, which is fastened to a vehicle body frame (not shown) such that the rubber bushing 10 is pressure-mounted to the vehicle body frame.

The rubber bushing 10 includes a main body 100, elastic holes 101 and stop protrusions 102. The main body 100 has a holding hole 100a, which is formed at a central portion through the opposite ends of the main body 100 so that the stabilizer bar 2 is received in the holding hole 100a, and a slit 100b, which is formed by cutting the main body 100 from the upper surface thereof to the upper surface of the sidewall of the holding hole 100b such that the stabilizer bar 2 can be easily inserted in the holding hole 100a using the slit 100b. Here, the holding hole 100a has a diameter smaller than the diameter of the stabilizer bar 2 so that the rubber bushing 10 is force-fitted over the stabilizer bar 2, thereby the ability of the rubber bushing 2 to support the stabilizer bar 2 is increased. Preferably, as required, the slit 100b further extends from the lower surface of the sidewall of the holding hole 100a to a predetermined depth such that, when the rubber bushing 10 is force-fitted over the stabilizer bar 2, opposite parts of the rubber bushing 10 based on the slit 100b can be easily separated from each other.

Meanwhile, several elastic holes 101 are formed in each of the opposite ends of the main body 100. Here, it is preferable that these elastic holes 101 be formed in each of the opposite ends of the main body 100 at predetermined positions arranged to form a circle. Thanks to the elastic holes 101 formed in the opposite ends of the main body 100, the stiffness of the main body 100 with respect to a direction (A) in which the stabilizer bar 2 is rotated is markedly reduced so that the rotational resistance of the stabilizer bar 2 is reduced, thus preventing slippage between the stabilizer bar 2 and the rubber bushing 10, thereby preventing noise from being generated by friction, and preventing the rubber bushing 10 from wearing.

Furthermore, the stop protrusions 102 are provided on the respective opposite ends of the circumferential outer surface of the main body 100, so that the rubber bushing 10 is coupled to the mounting bracket 20 in a concavo-convex coupling manner, thus preventing the rubber bushing 10 from moving in an axial direction (A') with respect to the stabilizer bar 2.

The metal plates 30 are inserted into the main body 100 of the rubber bushing 10 such that the elastic holes 101 are sectioned into first spaces 101a and second spaces 101b by the metal plates 30. It is preferable that each metal plate 30 have a 'C' shape such that the metal plates 30 are inserted into the main body 100 at positions that - surround the holding hole 100a in a cylindrical arrangement. Thanks to the metal plates 30 inserted into the main body 100 of the rubber bushing 10, the internal stiffness of the main body of the rubber bushing 10 is increased, thus preventing the rubber bushing 10 from being deformed in the direction (A) in which the stabilizer bar 2 is rotated, and preventing the rubber bushing 10 from being deformed by compressing force of the mounting bracket 20 when the rubber bushing 10 is pressure-mounted to the vehicle body frame, thereby enhancing the mounting force.

The mounting bracket 20 includes a bushing receiving part 200, which has in opposite ends thereof stop grooves 200a, into which the respective stop protrusions 102 of the rubber bushing 10 are inserted, and a pair of mounting plates 201, which are provided on respective opposite edges of the bushing receiving part 200. A mounting hole 201a is formed at the central position through each mounting plate 201. Thus, the mounting bracket 20 receives the rubber bushing 10 in the circumferential inner surface thereof and fastens it to the vehicle body frame.

The operation and effect of the apparatus 1 for mounting the stabilizer bar for vehicles according to the embodiment of the present invention will be described herein below with reference to FIGS. 3 and 4.

As shown in FIGS. 3 and 4, in the stabilizer bar mounting apparatus 1 of the present invention, because the diameter of the holding hole 100a of the main body 100 of the rubber bushing 10, into which the stabilizer bar 2 is inserted, is less than the diameter of the stabilizer bar 2, when the rubber bushing 10 is mounted to the vehicle body frame (not shown) using the mounting bracket 20, the rubber bushing 10 compresses the rubber bushing 10, thus enhancing the ability to support the stabilizer bar 2, thereby preventing the stabilizer bar 2 from slipping and leaning in one direction.

Furthermore, the several elastic holes 101 reduce the stiffness of the main body 100 of the rubber bushing 10 in the rotational direction (A), thus markedly reducing the rotational resistance of the stabilizer bar 2. Thereby, the stabilizer bar 2 is prevented from slipping with respect to the rubber bushing 10 in the rotational direction (A), thus preventing noise from being generated by friction, and preventing the rubber bushing 10 from wearing. As a result, the durability of the rubber bushing 10 can be enhanced, and the vehicle interior can be maintained quiet when the vehicle travels.

In addition, the metal plates 30 increase the internal stiffness of the main body 100 of the rubber bushing 10, thus preventing the rubber bushing 10 from being deformed by force applied in the direction (A) in which the stabilizer bar 2 is rotated, thereby preventing a gap from occurring between the circumferential outer surface of the stabilizer bar 2 and the holding hole 100a of the main body 100 of the rubber bushing 10. As such, a gap is prevented from occurring between the circumferential outer surface of the stabilizer bar 2 and the holding hole 100a of the main body 100 of the rubber bushing 10, and foreign substances are prevented from entering the space between the circumferential outer surface of the stabilizer bar 2 and the holding hole 100a of the main body 100 of the rubber bushing 10. Thus, the circumferential outer surface of the stabilizer bar 2 is prevented from being worn by the foreign substances.

Furthermore, because the internal stiffness of the metal plates 30 of the main body 100 of the rubber bushing 10 is increased by the metal plates 30, when the rubber bushing 10 is pressure-mounted to the vehicle body frame using the mounting bracket 20, the rubber bushing 10 is prevented from being deformed by the compressing force of the mounting bracket 20, so that the mounting ability thereof is enhanced.

As described above, the stabilizer bar mounting apparatus 1 of the present invention has improved ability to support the stabilizer bar 2, thus preventing the stabilizer bar 2 from being pushed and leaning in one direction. Furthermore, the present invention reduces the stiffness of the rubber bushing 10 in the rotational direction (A), so that slippage between the stabilizer bar 2 and the rubber bushing 10 is not caused, thus preventing noise from being generated by friction, thereby keeping the vehicle interior quiet when the vehicle travels. In addition, because the rubber bushing 10 is prevented from being worn by frictional heat, the durability of the rubber bushing 10 can be enhanced. Moreover, the present invention enhances the internal stiffness of the rubber bushing 10, so that the rubber bushing 10 is prevented from being deformed in the rotational direction (A) of the stabilizer bar 2 even after it is used for a long period. Therefore, a gap is prevented from occurring between the stabilizer bar 2 and the rubber bushing 10, thus preventing foreign substances, which causes abrasion of the circumferential outer surface of the stabilizer bar 2, from entering between the stabilizer bar 2 and the rubber bushing 10. Hence, the expected life span of the stabilizer bar 2 can be markedly extended. As well, the rubber bushing 10 is prevented from being deformed by the compressing force when the rubber bushing 10 is press-mounted to the vehicle body frame, thus enhancing the mounting force.

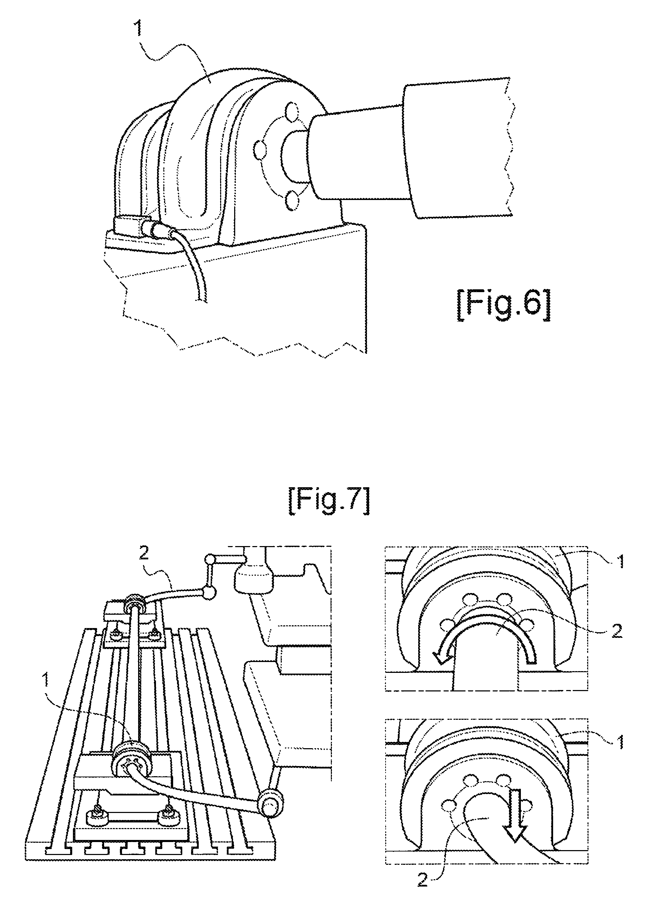

Hereinafter, the results of noise tests of the mounting apparatus 1 of the present invention and the conventional mounting apparatus will be compared with reference to FIGS. 5 and 6 and Table. 1.

FIG. 5 is a picture showing a side of a noise tester for stabilizer bar mounting apparatuses for vehicles. FIG. 6 is a picture showing the stabilizer bar mounting apparatus set in the noise tester of FIG. 5. As shown in FIGS. 5 and 6, the mounting apparatus 1 of the present invention and the conventional mounting apparatus are set in the noise testers, and the operation, in which the stabilizer bar was twisted at a torsion angle of ±20°, was repeated one million times under conditions of a sub-zero temperature, for example, 15°C below zero, at which the generation of noise by the stabilizer bar is typically greatest. During this process, the mounting apparatuses were subjected to physical shocks for one hour at the points shown in Table. 1, and the occurrence of noise was observed.

**Table 1**

| classific-ation | 0 repetitions | 50 thousand repetitions | 100 thousand repetitions | 300 thousand repetitions | 700 thousand repetitions | 1 millionrep etitions |
|---|---|---|---|---|---|---|
| Typical mounting apparatus | No noise | No noise | No noise | No noise | Noise | Noise |
| Mounting apparatus of the present invention | No noise | No noise | No noise | No noise | No noise | No noise |

As shown in the above Table. 1, in the case of the conventional mounting apparatus, noise occurred after 700 thousands repetitions, but, in the case of the mounting apparatus of the present invention, no noise occurred even after one million repetitions. Therefore, it is to be appreciated that the mounting apparatus of the present invention has very superior noise prevention ability compared to the conventional mounting apparatus.

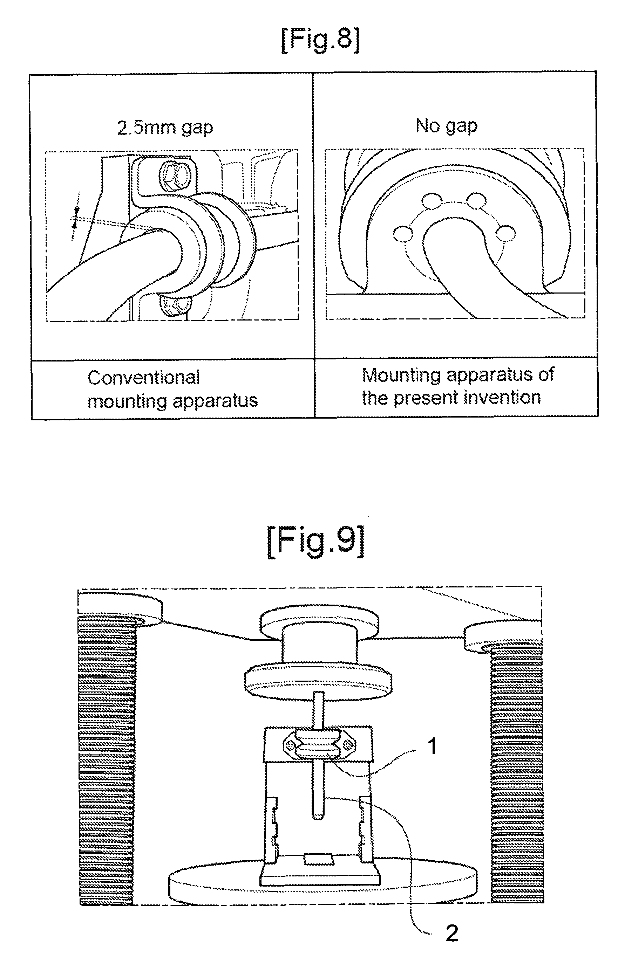

Meanwhile, the results of tests for comparing the durability of the mounting apparatus of the present invention with that of the conventional mounting apparatus will be explained with reference to FIGS. 7 and 8 and Table. 2.

FIG. 7 is a picture showing the stabilizer bar set in a stabilizer bar durability tester using the mounting apparatuses. As shown in FIG. 7, after the stabilizer bar 2 was set in the stabilizer bar durability tester using the mounting apparatuses 1, a test, in which the opposite ends of the stabilizer bar 2 are alternately moved upwards and downwards within a range of ±42mm at a speed of 3Hz, was conducted. The results of the test are described in the following Table. 2.

**Table 2**

| classification | Axial shift of stabilizer bar | | |
|---|---|---|---|
| | 50 thousand repetitions | 300 thousand repetitions | 1 million repetitions |
| Conventional mounting apparatus | 5mm shift | 10mm shift | |
| Mounting apparatus of the present invention | No shift | No shift | No shift |

As shown in Table. 2, in the case of the conventional mounting apparatus, when the operation, in which the opposite ends of the stabilizer bar are alternately moved upwards and downwards within a range of ±42mm at a speed of 3Hz, was repeated 50 thousand times, the stabilizer bar was shifted by 5mm in the axial direction. When the operation was repeated 300 thousand times, the stabilizer bar was shifted by 10mm in the axial direction. However, in the present invention, even after the operation was repeated one million times, the stabilizer bar was not shifted in the axial direction. Furthermore, FIG. 8 is pictures comparing the occurrence of gaps in the mounting apparatus of the present invention and in the conventional mounting apparatus after the durability test has been conducted. As shown in FIG. 8, after the operation, in which the opposite ends of the stabilizer bar were alternately moved upwards and downwards within a range of ±42mm at a speed of 3Hz, was repeated one million repetitions, the mounting apparatus was observed. As shown in FIG. 8A, in the conventional mounting apparatus, a gap of 2.5mm occurred between the stabilizer bar and the mounting apparatus. However, as shown in FIG. 8B, in the present invention, no gap occurred between the stabilizer bar and the mounting apparatus.

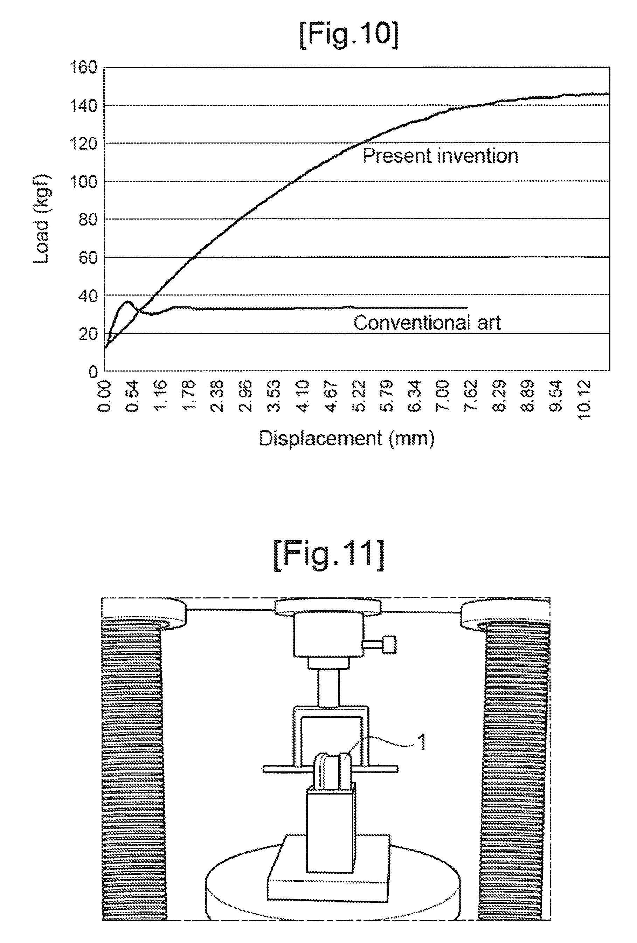

The results of tests for comparing the axial supporting forces of the mounting apparatus of the present invention and the conventional mounting apparatus will be explained with reference to FIGS. 9 and 10.

FIG. 9 is a picture showing a process of testing the axial supporting force of the mounting apparatus with respect to the stabilizer bar. FIG. 10 is a graph showing the results of the test of FIG. 9. As shown in FIG. 9, the test, in which a load is applied to the stabilizer bar 2 in an axial direction at a speed of 10 mm/min to find the axial supporting force of the mounting apparatus 1 with respect to the stabilizer bar 2, was conducted in a 20 ton class UTM (universal testing machine) using a separate jig that supported the mounting apparatus 1 such that the load could be axially applied to the stabilizer bar 2. The results of tests on the mounting apparatus of the present invention and on the conventional mounting apparatus are compared in the graph of FIG. 10. As shown in FIG. 10, the axial supporting force of the conventional mounting apparatus was approximately 36.9kgf, and the axial supporting force of the mounting apparatus of the present invention was approximately 145.8kgf. Therefore, even in the case of the axial support force of the mounting apparatus with respect to the stabilizer bar, it is to be appreciated that the mounting apparatus of the present invention is markedly superior compared to the conventional mounting apparatus.

The results of a test for comparing the stiffness of the mounting apparatus of the present invention with that of the conventional mounting apparatus will be described with reference to FIGS. 11 through 14.

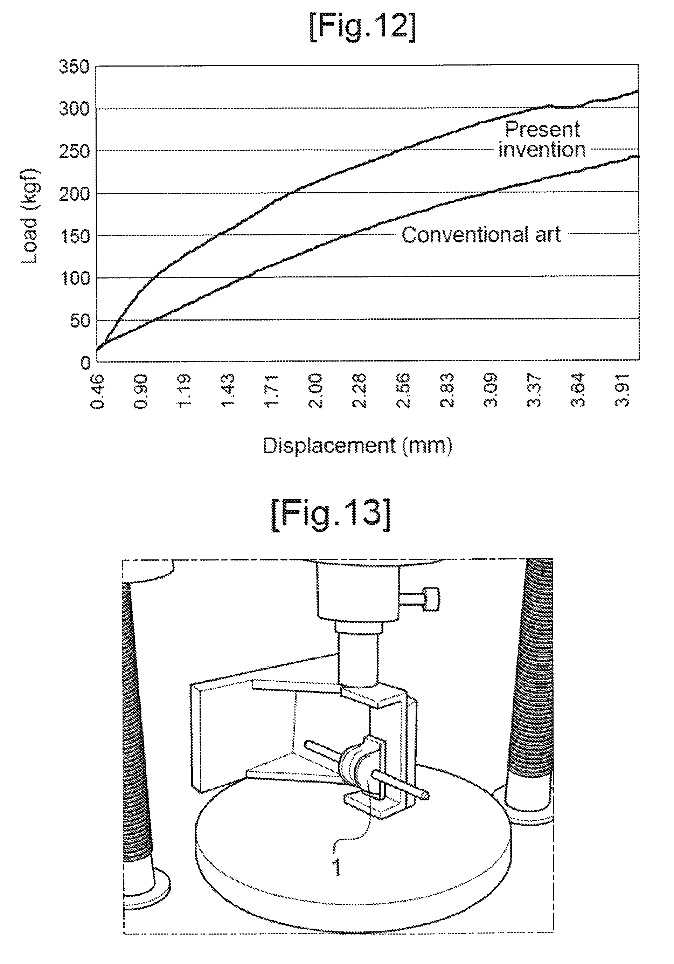

FIG. 11 is a picture showing a process of testing the stiffness of the mounting apparatus against transverse force. FIG. 12 is a graph showing the results of the test of FIG. 11. As shown in FIG. 11, the test, in which a load is applied to the stabilizer bar 2 in a transverse direction at a speed of 10 mm/min, was conducted in a 20 ton class UTM using a separate jig that supported the mounting apparatus 1 such that the load could be applied to the stabilizer bar 2 in a transverse direction. The results of the tests of the mounting apparatus of the present invention and the conventional mounting apparatus are compared in the graph of FIG. 12. As appreciated in the graph of FIG. 12, the mounting apparatus of the present invention required force greater than that of the conventional mounting apparatus to achieve the same displacement. Therefore, it is to be appreciated that the stiffness of the mounting apparatus of the present invention is greater than that of the conventional mounting apparatus.

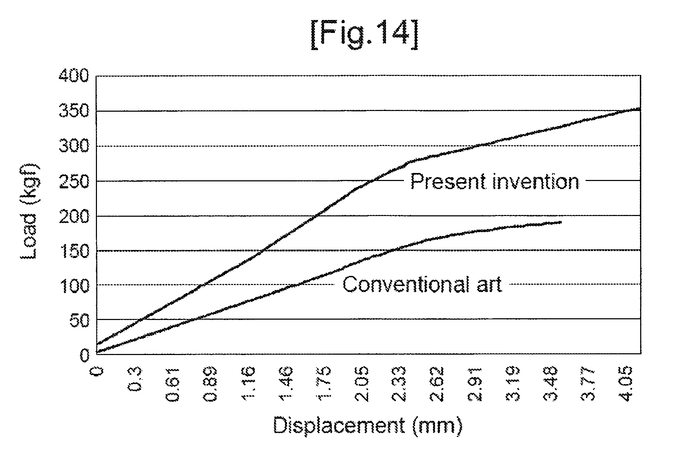

FIG. 13 is a picture showing a process of testing the stiffness of the mounting apparatus against a predetermined directional force. FIG. 14 is a graph showing the results of the test of FIG. 13. As shown in FIG. 13, the test, in which a load is applied to the stabilizer bar 2 in a predetermined direction at a speed of 10 mm/min, was conducted in a 20 ton class UTM using a separate jig that supported the mounting apparatus 1 such that the load could be applied to the stabilizer bar 2 in a predetermined direction. The results of the tests of the mounting apparatus of the present invention and the conventional mounting apparatus are compared in the graph of FIG. 14. As appreciated in the graph of FIG. 12, the mounting apparatus of the present invention required force greater than that of the conventional mounting apparatus to achieve the same displacement. Therefore, it is to be appreciated that the stiffness of the mounting apparatus of the present invention is greater than that of the conventional mounting apparatus.

### Industrial Applicability

As described above, the present invention provides an apparatus for mounting a stabilizer bar for vehicles, which has improved ability to support the stabilizer bar, thus preventing the stabilizer bar from being pushed and leaning in one direction, and which reduces the stiffness of a rubber bushing with respect to the rotational direction, so that slippage between the stabilizer bar and the rubber bushing is prevented from being caused, thus preventing noise from being generated by friction, thereby keeping the vehicle interior quiet when the vehicle travels. Furthermore, because the rubber bushing is prevented from being worn by frictional heat, the durability of the rubber bushing can be enhanced. Moreover, the present invention enhances the internal stiffness of the rubber bushing, so that the rubber bushing is prevented from being deformed in the rotational direction of the stabilizer bar even after it is used for a long period. Therefore, a gap is prevented from occurring between the stabilizer bar and the rubber bushing, thus preventing foreign substances, which cause abrasion of the circumferential outer surface of the stabilizer bar, from entering between the stabilizer bar and the rubber bushing. Hence, the expected life span of the stabilizer bar can be markedly extended. As well, the rubber bushing is prevented from being deformed by compressing force when the rubber bushing is press-mounted to the vehicle body frame, thus enhancing the mounting force. Thanks to these advantages, the present invention is regarded as being very useful.

## Claims

1. An apparatus (1) for mounting a stabilizer bar (2) to a vehicle body frame, comprising:
a rubber bushing (10), comprising: a main body (100) having a holding hole (100a) formed at a central portion through opposite ends of the main body (100) for insertion of the stabilizer bar (2) into the holding hole (100a), and a slit (100b) extending from an upper surface thereof to an upper surface of a sidewall of the holding hole (100a) such that the stabilizer bar (2) is inserted into the holding hole (100a); and a stop protrusion (102) provided on a circumferential outer surface of the main body (100); and a mounting bracket (20), comprising: a bushing receiving part (200) having a stop groove (200a) engaging with the stop protrusion of the rubber bushing (10); and a pair of mounting plates (201) provided on respective opposite edges of the bushing receiving part (200), the mounting bracket (20) receiving the rubber bushing (10) in a circumferential inner surface thereof and fastening the rubber bushing (10) to the vehicle body frame, and **characterised in that**:
a plurality of elastic holes (101) formed in each of the opposite ends of the main body (100) to reduce stiffness of the main body (100) in a rotational direction thereof, thus reducing rotational resistance of the stabilizer bar (2); and
a plurality of metal plates (30) inserted into the main body (100) of the rubber bushing (10) to form a shape such that elastic holes (101) are sectioned into first spaces (101a) and second spaces (101b) by the metal plates (30), thus preventing the rubber bushing (10) from being deformed.

2. The apparatus according to claim 1, wherein the holding hole (100a) of the rubber bushing (10) has a diameter less than a diameter of the stabilizer bar (2), so that the rubber bushing (10) is force-fitted over the stabilizer bar (2).

3. The apparatus according to claim 1 or 2, wherein the slit (100b) of the rubber bushing (10) further extends from a lower surface of the sidewall of the holding hole (100a) to a predetermined depth.

4. The apparatus according to claim 1, 2 or 3, wherein the plurality of elastic holes (101) formed in each of the opposite ends of the main body (100) of the rubber bushing (10) are disposed at predetermined positions in a circular arrangement.

5. The apparatus according to claim 1, 2, 3 or 4, wherein each of the plurality of metal plates (30) has a 'C' shape, so that the plurality of metal plates (30) is inserted into the main body (100) of the rubber bushing (10) at positions that surround the holding hole (100a) in a cylindrical arrangement.

## Patentansprüche

1. Vorrichtung (1) zum Befestigen einer Stabilisatorstab (2) am Karosserierahmen eines Fahrzeugs, umfassend:
eine Gummimuffe (10), umfassend: einen Hauptkörper (100) mit einem Aufnahmeloch (100a), das in einem mittigen Abschnitt durch gegenüberliegende Enden des Hauptkörpers (100) zur Einführung der Stabilisatorstab (2) in das Aufnahmeloch (100a) ausgebildet ist, und einem Schlitz (100b), der sich derart von einer oberen Fläche davon zu einer oberen Fläche einer Seitenwand des Aufnahmelochs (100a) erstreckt, dass die Stabilisatorstab (2) in das Aufnahmeloch (100a) eingeführt wird; und einen Anschlagsvorsprung (102), der auf einer äußeren Umfangsfläche des Hauptkörpers (100) vorgesehen ist; und eine Befestigungsschelle (20), umfassend: ein Muffenaufnahmeteil (200) mit einer Anschlagsnut (200a), die in den Anschlagsvorsprung der Gummimuffe (10) eingreift; und ein Paar von Befestigungsplatten (201), die auf jeweiligen gegenüberliegenden Kanten des Muffenaufnahmeteils (200) vorgesehen sind, wobei die Befestigungsschelle (20) die Gummimuffe (10) in einer inneren Umfangsfläche davon aufnimmt und die Gummimuffe (10) am Karosserierahmen des Fahrzeugs festsetzt; und **dadurch gekennzeichnet ist, dass**:
eine Mehrzahl von elastischen Löchern (101) in jedem der gegenüberliegenden Enden des Hauptkörpers (100) ausgebildet ist, um die Steifheit des Hauptkörpers (100) in einer Drehrichtung davon zu verringern, um dadurch den Drehwiderstand der Stabilisatorstab (2) zu reduzieren; und
eine Mehrzahl von Metallplatten (30) in den Hauptkörper (100) der Gummimuffe (10) eingeführt ist, um eine derartige Form zu bilden, dass die elastischen Löcher (101) durch die Metallplatten (30) in erste Räume (101a) und zweite Räume (101b) aufgeteilt sind, um dadurch zu verhindern, dass sich die Gummimuffe (10) verformt.

2. Vorrichtung nach Anspruch 1, wobei das Aufnahmeloch (100a) der Gummimuffe (10) einen Durchmesser aufweist, der geringer als ein Durchmesser der Stabilisatorstab (2) ist, so dass die Gummimuffe (10) über die Stabilisatorstab (2) kraftschlüssig wird.

3. Vorrichtung nach Anspruch 1 oder 2, wobei sich der Schlitz (100b) der Gummimuffe (10) ferner von einer unteren Fläche der Seitenwand des Aufnahmelochs (100a) bis zu einer vorbestimmten Tiefe erstreckt.

4. Vorrichtung nach Anspruch 1, 2 oder 3, wobei die Mehrzahl von elastischen Löchern (101), die in jedem der gegenüberliegenden Enden des Hauptkörpers (100) der Gummimuffe (10) ausgebildet ist, an vorbestimmten Positionen in einer kreisförmigen Anordnung angeordnet ist.

5. Vorrichtung nach Anspruch 1, 2, 3 oder 4, wobei jede der Mehrzahl von Metallplatten (30) eine "C"-Form aufweist, so dass die Mehrzahl von Metallplatten (30) an Positionen in den Hauptkörper (100) der Gummimuffe (10) eingeführt ist, die das Aufnahmeloch (100a) in einer zylindrischen Anordnung umgeben.

## Revendications

1. Dispositif (1) pour le montage d'une barre stabilisatrice (2) sur la carrosserie d'un véhicule, comprenant :
une douille en caoutchouc (10), comprenant: un corps principal (100) ayant un orifice de maintien (100a) formé au niveau d'une partie centrale traversant des extrémités opposées du corps principal (100) pour l'insertion de la barre stabilisatrice (2) dans l'orifice de maintien (100a), et une fente (100b) s'étendant à partir d'une surface supérieure de celui-ci jusqu'à une surface supérieure d'une paroi latérale de l'orifice de maintien (100a) de telle sorte que la barre stabilisatrice (2) soit insérée dans l'orifice de maintien (100a), et une saillie d'arrêt (102) prévue sur une surface circonférentielle extérieure du corps principal (100), et un support de montage (20), comprenant: une partie de réception de douille (200) ayant une rainure d'arrêt (200a) qui vient en prise avec la saillie d'arrêt de la douille en caoutchouc (10), et une paire de plaques de montage (201) prévues sur les bords respectifs opposés de la partie de réception de douille (200), le support de montage (20) recevant la douille en caoutchouc (10) dans une surface circonférentielle interne de celui-ci et fixant la douille en caoutchouc (10) à la carrosserie du véhicule, et **caractérisé par** :
une pluralité d'orifices élastiques (101) formés dans chacune des extrémités opposées du corps principal (100) afin de réduire la raideur du corps principal (100) dans un sens de rotation de celui-ci, réduisant ainsi la résistance à la rotation de la barre stabilisatrice (2); et
une pluralité de plaques métalliques (30) insérées dans le corps principal (100) de la douille en caoutchouc (10) pour former un profil tel que des orifices élastiques (101) sont séparés en premiers espaces (101a) et deuxièmes espaces (101b) par les plaques métalliques (30), empêchant ainsi la douille en caoutchouc (10) de se déformer.

2. Le dispositif selon la revendication 1, dans lequel l'orifice de maintien (100a) de la douille en caoutchouc (10) a un diamètre inférieur à un diamètre de la barre stabilisatrice (2), de sorte que la douille en caoutchouc (10) est montée à force sur la barre stabilisatrice (2).

3. Le dispositif selon la revendication 1 ou 2, dans lequel la fente (100b) de la douille en caoutchouc (10) s'étend en outre de la surface inférieure de la paroi de l'orifice de maintien (100a) jusqu'à une profondeur prédéterminée.

4. Le dispositif selon la revendication 1, 2 ou 3, dans lequel la pluralité d'orifices élastiques (101) formés dans chacune des extrémités opposées du corps principal (100) de la douille en caoutchouc (10) sont disposés à des positions prédéterminées dans un arrangement circulaire.

5. Le dispositif selon la revendication 1, 2, 3 ou 4, dans lequel chacune de la pluralité de plaques métalliques (30) présente un profil en «C», de sorte que la pluralité de plaques métalliques (30) soient insérées dans le corps principal (100) de la douille en caoutchouc (10) à des positions qui entourent l'orifice de maintien (100a) dans un arrangement cylindrique.
